(19) **Europäisches Patentamt / European Patent Office / Office européen des brevets**

(11) **EP 3 779 515 B1**

(12) # FASCICULE DE BREVET EUROPÉEN

(45) Date de publication et mention de la délivrance du brevet:
**18.06.2025 Bulletin 2025/25**

(21) Numéro de dépôt: **20190662.5**

(22) Date de dépôt: **12.08.2020**

(51) Classification Internationale des Brevets (IPC):
**G01S 19/21** (2010.01) **G01S 19/24** (2010.01)
**G01S 19/30** (2010.01)

(52) Classification Coopérative des Brevets (CPC):
**G01S 19/21; G01S 19/24; G01S 19/30**

(54) **PROCÉDÉ DE DÉTECTION D'UNE FAUSSE SYNCHRONISATION D'UN RÉCEPTEUR AVEC UN SATELLITE, RÉCEPTEUR ET PRODUIT PROGRAMME D'ORDINATEUR ASSOCIÉS**

VERFAHREN ZUR DETEKTION EINER FALSCHEN SYNCHRONISIERUNG EINES EMPFÄNGERS MIT EINEM SATELLITEN, ENTSPRECHENDER EMPFÄNGER UND ENTSPRECHENDES COMPUTERPROGRAMMPRODUKT

METHOD FOR DETECTING A FALSE SYNCHRONISATION OF A RECEIVER WITH A SATELLITE, ASSOCIATED RECEIVER AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.08.2019 FR 1909209**

(43) Date de publication de la demande:
**17.02.2021 Bulletin 2021/07**

(73) Titulaire: **THALES**
**92400 Courbevoie (FR)**

(72) Inventeurs:
• **MARTIN, Nicolas**
  **26000 VALENCE (FR)**
• **BOUVET, Denis**
  **26000 VALENCE (FR)**
• **MEHLEN, Christian**
  **26000 VALENCE (FR)**

(74) Mandataire: **Lavoix**
**2, place d'Estienne d'Orves**
**75441 Paris Cedex 09 (FR)**

(56) Documents cités:
**FR-A1- 2 974 914    FR-A1- 3 043 790**
**FR-A1- 3 047 567    US-A1- 2011 103 432**

• **SHANMUGAM SURENDRAN ET AL: "GPS L5 Cross-correlation Detection in WAAS G-III Reference Receiver", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21 September 2012 (2012-09-21), pages 1369 - 1378, XP056008450**
• **BOUVET DENIS ET AL: "Proposal of Acceptable Means of BOC(1,1) False Locks Mitigation for DFMC SBAS Equipment", GNSS 2018 - PROCEEDINGS OF THE 31ST INTERNATIONAL TECHNICAL MEETING OF THE SATELLITE DIVISION OF THE INSTITUTE OF NAVIGATION (ION GNSS+ 2018), THE INSTITUTE OF NAVIGATION, 8551 RIXLEW LANE SUITE 360 MANASSAS, VA 20109, USA, 28 September 2018 (2018-09-28), pages 1661 - 1674, XP056014988**

**Description**

La présente invention concerne un procédé de détection d'une fausse synchronisation d'un récepteur avec un satellite.

La présente invention concerne également un récepteur et un produit programme d'ordinateur associés.

Le procédé selon l'invention est mis en œuvre après une phase d'acquisition d'un signal de navigation issu d'un satellite.

Un tel satellite fait partie d'un système global de positionnement par satellites connu également sous le sigle anglais GNSS (pour *« Global Navigation Satellite System »*).

De manière générale, un système GNSS est composé d'une pluralité de satellites permettant à un récepteur mobile de déterminer sa position dans un repère terrestre, sa vitesse et l'heure.

Il existe actuellement plusieurs systèmes GNSS parmi lesquels on peut notamment citer le système GPS, le système GLONASS ou encore le système GALILEO dont la mise en service opérationnelle est prévue prochainement.

Les satellites d'un tel système GNSS sont aptes à émettre des signaux électromagnétiques comprenant notamment une information de navigation.

Chaque information de navigation comprend généralement des données relatives au temps d'émission par le satellite du signal correspondant et à la position courante du satellite. En particulier, les données relatives à la position courante du satellite contiennent généralement l'almanach donnant une position grossière du satellite et les éphémérides donnant la position courante exacte du satellite.

L'information de navigation est portée par une onde porteuse et modulée par un code d'étalement propre à chaque satellite. Ainsi, les signaux sont émis par les satellites en utilisant une technique d'étalement de spectre.

Le récepteur est apte à recevoir les signaux émis par les satellites et à en extraire l'information de navigation pour notamment déterminer la distance jusqu'au satellite ayant émis le signal correspondant. Cette distance, appelée également pseudo-distance, est déterminée en analysant le temps de propagation du signal correspondant.

Pour déterminer sa position, sa vitesse et l'heure, le récepteur met en œuvre un traitement numérique des informations de navigation issues d'au moins trois satellites différents.

En pratique, pour avoir une position plus précise, le récepteur a besoin d'informations de navigation issues d'au moins quatre satellites différents.

Plus précisément, pour acquérir l'information de navigation d'un satellite donné, le récepteur met en œuvre deux phases traitant les signaux issus de ce satellite.

Lors d'une phase initiale, appelée dans l'état de l'art, phase d'acquisition, le récepteur génère un signal local contenant notamment un code d'étalement local présentant l'image du code d'étalement du satellite.

Comme initialement le récepteur ne connait pas sa position, le signal local n'est pas synchronisé avec le signal reçu. Ceci signifie en particulier que le signal local est décalé en fréquence de porteuse du signal reçu d'une valeur appelée valeur de Doppler, et que le code d'étalement du signal reçu est retardé du code d'étalement local d'une valeur appelée valeur de retard.

Puis, le récepteur effectue une recherche d'un pic des corrélations entre le signal local et le signal reçu en essayant différentes valeurs de Doppler et de retard.

Lorsqu'un pic est détecté, le récepteur détermine les valeurs de Doppler et de retard correspondant à ce pic et à partir de ces valeurs, lance une phase suivante, appelée dans l'état de l'art, phase de poursuite.

Lors de la phase de poursuite, le récepteur met à jour régulièrement les valeurs de Doppler et de retard, et extrait l'information de navigation du signal émis par le satellite en utilisant notamment le code d'étalement local et les valeurs de Doppler et de retard déterminées.

À l'issue de la phase d'acquisition, il est considéré que le récepteur s'est synchronisé avec le satellite ou encore s'est « accroché » au satellite.

Ceci signifie en particulier que le récepteur a pu trouver les valeurs de Doppler et de retard relatives à ce satellite pour initier la phase de poursuite.

Il arrive parfois que le récepteur synchronise son signal local correspondant au satellite recherché sur le signal reçu d'un autre satellite, ce qui conduit à une mesure de distance erronée, et donc potentiellement à un positionnement faux.

Dans ce cas, il s'agit d'une fausse synchronisation ou d'un faux « accrochage ».

Cela se produit par exemple lorsque la corrélation entre le signal local et le signal reçu du satellite recherché donne moins d'énergie que la corrélation avec le signal reçu d'un autre satellite, à cause d'un écart de puissance reçue élevé.

Il existe dans l'état de l'art différentes méthodes permettant d'éviter une telle fausse synchronisation.

Ainsi, une méthode utilisée de manière conventionnelle, consiste à vérifier la cohérence entre la position du satellite calculée à partir des éphémérides contenues dans l'information de navigation et celle calculée à partir de l'almanach, contenant les identifiants des satellites, contrairement aux éphémérides. L'incohérence entre ces valeurs signifie donc une fausse synchronisation.

Toutefois, cette méthode n'est pas complètement satisfaisante. En particulier, elle nécessite de recueillir la totalité des éphémérides contenues dans l'information de navigation ce qui est relativement long. En pratique, cela peut prendre jusqu'à deux minutes.

On conçoit alors que cela pénalise le fonctionnement du récepteur, notamment suite à un masquage du satellite et une ré-acquisition, et ne permet pas d'assurer une continuité de service.

On connait également une méthode de détection d'une fausse synchronisation décrite dans le document FR 3 043 790 qui utilise les propriétés algébriques des codes d'étalement. Cela rend alors la mise en œuvre de cette méthode dépendante des codes d'étalement utilisés.

On connait également une méthode de détection d'une fausse synchronisation décrite dans le document FR 3 047 567 qui consiste à comparer la puissance des signaux reçus sur plusieurs voies de corrélation.

On connait enfin une méthode de détection d'une fausse synchronisation décrite dans US 2011/103432 A1.

La présente invention a pour but d'améliorer les méthodes et notamment, de détecter une fausse synchronisation de manière rapide, efficace et indépendante des codes d'étalements utilisés.

À cet effet, l'invention a pour objet un procédé de détection d'une fausse synchronisation conforme à la revendication 1.

Suivant d'autres aspects avantageux de l'invention, le procédé de détection comprend une ou plusieurs des caractéristiques des revendications 2 à 7.

L'invention a également pour objet un produit programme d'ordinateur comportant des instructions logicielles qui, lorsque mises en œuvre par un équipement informatique, mettent en œuvre un procédé tel que défini ci-dessus.

L'invention a également pour objet un récepteur mettant en œuvre le précédé tel que défini précédemment.

Ces caractéristiques et avantages de l'invention apparaîtront à la lecture de la description qui va suivre, donnée uniquement à titre d'exemple non limitatif, et faite en référence aux dessins annexés, sur lesquels :

- [Fig 1] la figure 1 est une vue schématique d'un système global de positionnement par satellites et d'un récepteur selon l'invention ;
- [Fig 2] la figure 2 est une vue détaillée du récepteur de la figure 1 ; et
- [Fig 3] la figure 3 est un organigramme d'un procédé de détection mis en œuvre par le récepteur de la figure 2.

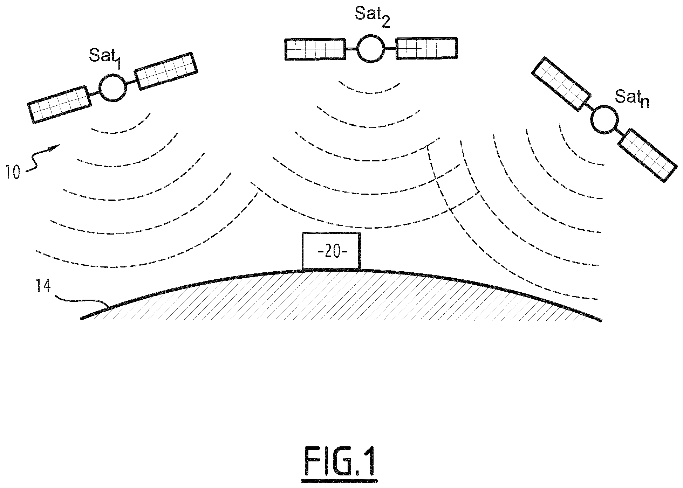

On a en effet représenté sur la figure 1, un système global 10 de positionnement par satellites du type GNSS (de l'anglais « *Global Navigation Satellite System* »). Ce système global 10 est par exemple le système GALILEO.

En référence à cette figure 1, le système de positionnement 10 comporte une pluralité de satellites $Sat_n$ disposés sur des orbites différentes autour de la Terre pour laquelle le système de positionnement 10 est mis en place.

Le nombre total des satellites $Sat_n$ est par exemple égal à 30.

L'indice *n* correspond à un identifiant de chaque satellite $Sat_n$ et varie par exemple entre 1 et 30.

Chaque satellite $Sat_n$ est apte à émettre des signaux électromagnétiques S vers une partie de la surface terrestre 14 qu'il est en train de survoler.

En particulier, les satellites $Sat_n$ sont disposés de telle sorte qu'au moins quatre satellites $Sat_n$ sont aptes à émettre des signaux électromagnétiques de navigation S vers sensiblement chaque point de la surface terrestre 14.

La position courante de chaque satellite $Sat_n$ est caractérisée par les éphémérides relatives à ce satellite ou par l'almanach de celui-ci.

Comme cela est connu en soi, les éphémérides permettent de déterminer la position exacte du satellite $Sat_n$ alors que l'almanach donne une position grossière.

Chaque signal S émis par chacun des satellites $Sat_n$ comprend une voie de données comportant une information de navigation.

En particulier, un tel signal S comprend une information de navigation modulée par un code d'étalement de données $C_n^d(\phi_c)$ propre au satellite $Sat_n$ ayant émis ce signal.

L'information de navigation modulée est portée par une onde porteuse $exp(-j\phi_p)$ selon une technique connue en soi.

Chaque signal S émis par chacun des satellites $Sat_n$ comprend en outre une voie pilote comportant un code d'étalement pilote $C_n^p(\phi_c)$ propre au satellite $Sat_n$ ayant émis ce signal.

Chaque information de navigation comprend notamment le temps d'émission du signal correspondant, les éphémérides et l'almanach du satellite $Sat_n$ au moment de l'émission du signal S.

Chaque code d'étalement de données $C_n^d(\phi_c)$ ou pilote $C_n^p(\phi_c)$ présente un code binaire du type pseudo-aléatoire, connu également dans l'état de l'art sous le sigle anglais PRN (pour « *Pseudo Random Noise* »).

Chaque code d'étalement de données $C_n^d(\phi_c)$ ou pilote $C_n^p(\phi_c)$ est un code périodique avec une période de code dénotée $L_c$ et exprimée en un nombre entier d'unités de référence.

L'unité de référence est par exemple un chip dont la durée est dénotée $T_{chip}$ et exprimée en secondes.

On entend par « chip », une unité de référence correspondant à un créneau d'un code du type pseudo-aléatoire.

Sur la durée de chaque unité de référence, ou chip, le code d'étalement prend une valeur constante égale soit à +1 soit à -1.

Les codes d'étalement de données $C_n^d(\phi_c)$ ou pilote $C_n^p(\phi_c)$ sont caractérisés par leur fonctions d'autocorrélation $R_{n,n}$ déterminées respectivement par les formules suivantes :

$$R_{n,n}(\tau) = \frac{1}{L_c} \int_0^{L_c} C_n^d(u)\, C_n^d(u+\tau)\, du,$$

$$R_{n,n}(\tau) = \frac{1}{L_c} \int_0^{L_c} C_n^p(u)\, C_n^p(u+\tau)\, du.$$

Notamment, dans le point $\tau = 0$, dit point de référence, la fonction d'autocorrélation $R_{n,n}$ prend sa valeur maximale $V_{max}$. Pour $\tau \leq -T_{chip}$ et $\tau \geq T_{chip}$, la fonction d'autocorrélation $R_{n,n}$ prend des valeurs V très petites devant $V_{max}$, c'est-à-dire, $V \ll V_{max}$.

Les codes d'étalement de données $C_n^d(\phi_c)$ ou pilote $C_n^p(\phi_c)$ correspondant aux satellites $Sat_n$ différents, sont quasi-perpendiculaires. Autrement dit, la fonction d'inter-corrélation $R_{n,j}$ entre chaque couple de codes d'étalement différents $C_n^d(\phi_c)$ et $C_i^d(\phi_c)$ ou $C_n^p(\phi_c)$ et $C_i^p(\phi_c)$ prend des valeurs V négligeables devant $V_{max}$, les fonction d'inter-corrélation $R_{n,j}$ pour ces codes étant déterminées respectivement par les formules suivantes :

$$R_{n,j}(\tau) = \frac{1}{L_c} \int_0^{L_c} C_n^d(u)\, C_j^d(u+\tau)\, du\,,$$

$$R_{n,j}(\tau) = \frac{1}{L_c} \int_0^{L_c} C_n^p(u)\, C_j^p(u+\tau)\, du\,.$$

Chaque code d'étalement de données $C_n^d(\phi_c)$ permet de moduler l'information de navigation émise par le satellite $Sat_n$.

Chaque signal issu d'un satellite $Sat_n$ est démodulé en utilisant un code d'étalement qui est l'image locale $C_n^d(\phi_{cloc})$ du code d'étalement de données $C_n^d(\phi_c)$ ou l'image locale $C_n^p(\phi_{cloc})$ du code d'étalement pilote $C_n^p(\phi_c)$ correspondant à ce satellite.

Ces signaux sont démodulés selon différentes techniques d'émission des signaux de type complexe connues en soi.

Selon la technique connue sous le terme « Multiplexage CDMA » (de l'anglais « Code Division Multiple Access » ou « accès multiple à répartition en code » en français), chaque signal complexe est transmis via deux ondes porteuses à la même fréquence et de manière synchrone. Dans ce cas, le code d'étalement composite correspond à la somme des codes d'étalement de données $C_n^d(\phi_c)$ et pilote $C_n^p(\phi_c)$ correspondants.

Selon l'exemple de réalisation décrit ci-après, le système de positionnement 10 est le système GPS (de l'anglais « *Global Positioning System* »).

Bien entendu, d'autres exemples de réalisation sont également possibles.

Les signaux S émis au moins par certains des satellites $Sat_n$ sont reçus par un récepteur 20.

Le récepteur 20 est par exemple un dispositif électronique portable.

Le récepteur 20 est apte par exemple à se déplacer sur la surface terrestre 14 ou à la proximité de celle-ci avec une vitesse variable.

Le récepteur 20 est apte à recevoir des signaux S issus des satellites $Sat_n$, et à extraire de ces signaux S les informations de navigation pour déduire sa position courante, sa vitesse courante et l'heure comme ceci sera expliqué par la suite.

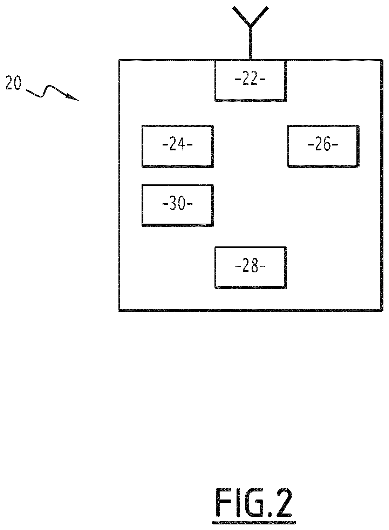

Le récepteur 20 est illustré plus en détail sur la figure 2.

Ainsi, en référence à cette figure 2, le récepteur 20 comporte une antenne 22, un module d'acquisition 24, un module de poursuite 26, un module de détection 28, un module de commande 30 et des ressources matérielles.

Les modules 24, 26, 28 et 30 se présentent par exemple sous la forme des logiciels qui sont mis en œuvre par les ressources matérielles prévues à cet effet, telles qu'un processeur, une mémoire vive, une mémoire morte, etc. Les ressources matérielles sont par exemple alimentées par une batterie.

En particulier, la mémoire morte du récepteur 20 est apte à stocker des images des codes d'étalement de données $C_n^d(\phi_c)$ et éventuellement pilote $C_n^p(\phi_c)$ de chaque satellite $Sat_n$.

L'antenne 22 est apte à recevoir des signaux $S_r$ électromagnétiques correspondant aux signaux S émis par les satellites $Sat_n$ lorsque ceux-ci se trouvent dans un domaine de sa visibilité.

Le module de commande 30 est apte à piloter le fonctionnement des modules 24, 26 et 28.

Le module d'acquisition 24 est apte à mettre en œuvre une phase d'acquisition des signaux $S_r$ selon des techniques connues en soi.

Le module de poursuite 26 est apte à mettre en œuvre une phase de poursuite des signaux $S_r$ selon des techniques connues en soi.

Finalement, le module de détection 28 est apte à mettre en œuvre une phase de convergence, transitoire entre la phase d'acquisition et la phase de poursuite. La phase de convergence comprend notamment un procédé de détection d'une fausse synchronisation selon l'invention. Ce procédé sera décrit en détail par la suite.

Le fonctionnement du récepteur 20 va désormais être expliqué.

À chaque démarrage du récepteur 20, le module de commande 30 initie une pluralité de canaux d'acquisition pour l'ensemble des satellites $Sat_n$. Chacun de ces canaux permet d'acquérir l'information de navigation issue du satellite $Sat_n$ auquel il est associée, lorsque ce satellite $Sat_n$ est dans le domaine de visibilité de l'antenne 22.

Le fonctionnement du récepteur 20 sur chaque canal d'acquisition est sensiblement analogue. Ainsi, seul le fonctionnement du récepteur 20 sur un canal sera expliqué ci-après.

Ce canal est associé par exemple au satellite $Sat_n$, dit par la suite satellite recherché. Il est supposé en outre que le satellite $Sat_n$ est situé dans le domaine de visibilité de l'antenne 22 et que ce satellite est apte à émettre des signaux de navigation.

Le récepteur 20 génère un signal local de données $S_{loc}^d$ comportant une onde porteuse locale $exp(-j\phi_{ploc})$ et un code d'étalement local de données $C_n^d(\phi_{cloc})$ correspondant à une image locale du code d'étalement de données $C_n^d(\phi_c)$ du satellite recherché.

Le signal local de données $S_{loc}^d$ en fonction du temps $t$ s'écrit alors sous la forme suivante :

$$S_{loc}^d(t) = \exp\left(-j\phi_{ploc}(t)\right) . C_n^d(\phi_{cloc}(t)),$$

avec $j^2 = -1$.

Le récepteur 20 génère en outre un signal local pilote $S_{loc}^p$ comportant une onde porteuse locale $exp(-j\phi_{ploc})$ et un code d'étalement local pilote $C_n^p(\phi_{cloc})$ correspondant à une image locale du code d'étalement de pilote $C_n^p(\phi_c)$ du satellite recherché.

Le signal local pilote $S_{loc}^d$ en fonction du temps t s'écrit alors sous la forme suivante :

$$S_{loc}^p(t) = \exp\left(-j\phi_{ploc}(t)\right) . C_n^p(\phi_{cloc}(t)),$$

avec $j^2 = -1$.

Puis, le module de commande 30 lance l'exécution de la phase d'acquisition qui est alors mise en œuvre par le module d'acquisition 24.

En particulier, lors de la phase d'acquisition, le module d'acquisition 24 détermine une valeur de Doppler et une valeur de retard du signal reçu $S_r$ par rapport au signal local de données $S^d_{loc}$ ou pilote $S^p_{loc}$.

La valeur de Doppler correspond au décalage en fréquence de l'onde porteuse locale $exp(\text{-}j\phi_{ploc})$ par rapport à l'onde porteuse $exp(\text{-}j\phi_p)$ du signal $S_r$ reçu.

La valeur de retard correspond au retard du code d'étalement pilote $C^p_n(\phi_c)$ de ce signal reçu par rapport au code d'étalement local pilote $C^p_n(\phi_{cloc})$.

Les valeurs de retard sont déterminées selon des techniques connues qui comprennent notamment le calcul de corrélations de trois types.

Un premier type de corrélations, dit ponctuel, consiste à calculer des corrélations entre le signal reçu $S_r$ et le signal local de données $S^d_{loc}$ ou pilote $S^p_{loc}$.

Un deuxième type de corrélations, dit d'avance, consiste à calculer des corrélations entre le signal reçu $S_r$ et un signal correspondant au signal local de données $S^d_{loc}$ ou pilote $S^p_{loc}$ dans lequel le code d'étalement local $C^d_n(\phi_{cloc} + d)$ ou $C^p_n(\phi_{cloc} + d)$ est décalé en avance d'une valeur $d$ comprise entre 0 et $T_{chip}$.

Un troisième type de corrélations, dit de retard, consiste à calculer des corrélations entre le signal reçu $S_r$ et un signal correspondant au signal local de données $S^d_{loc}$ ou pilote $S^p_{loc}$ dans lequel le code d'étalement local $C^d_n(\phi_{cloc} - d)$ ou $C^p_n(\phi_{cloc} - d)$ est décalé en retard de la même valeur $d$.

À l'issue de la phase d'acquisition, le récepteur 20 synchronise le signal local de données $S^d_{loc}$ ou pilote $S^p_{loc}$ avec le signal S émis par le satellite $Sat_n$ recherché en utilisant les valeurs de Doppler et de retard déterminées.

Puis, le module de commande 30 lance l'exécution de la phase de convergence et notamment du procédé de détection d'une fausse synchronisation. Ce procédé est notamment mis en œuvre par le module de détection 28.

La phase de convergence réalise un asservissement de la valeur de retard du code d'étalement local $C^d_n(\phi_{cloc})$ ou $C^p_n(\phi_{cloc})$ et de la valeur de Doppler de l'onde porteuse locale $exp(\text{-}j\phi_{ploc})$, sur le signal reçu $S_r$, grâce à des boucles de poursuite de code et de porteuse, grâce notamment aux trois types de corrélation précités.

Cette phase transitoire permet de faire coïncider précisément le code d'étalement local $C^d_n(\phi_{cloc})$ ou $C^p_n(\phi_{cloc})$ et l'onde porteuse locale $exp(\text{-}j\phi_{ploc})$ avec le code d'étalement $C^d_n(\phi_c)$ ou $C^p_n(\phi_c)$ et l'onde porteuse $exp(\text{-}j\phi_p)$ du signal satellite reçu $S_r$.

En outre, le procédé de détection mis en œuvre pendant cette phase permet de détecter une fausse synchronisation du canal d'acquisition correspondant avec un satellite $Sat_p$ autre que le satellite recherché $Sat_n$.

Notamment, lors d'une fausse synchronisation, les valeurs de Doppler et de retard déterminées par le module d'acquisition 24, correspondent au signal S émis par un satellite $Sat_p$ autre que le satellite $Sat_n$ recherché.

On conçoit alors que dans ce cas, les signaux $S^d_{loc}$ ou $S^p_{loc}$ et S ne peuvent pas être synchronisés correctement. Il s'agit donc d'une fausse synchronisation et d'un faux accrochage.

Lorsque le module de détection 28 détecte une fausse synchronisation, le module de commande 30 lance à nouveau la phase d'acquisition.

Lorsque le module de détection 28 ne détecte pas de fausse synchronisation, le module de commande 30 lance la phase de poursuite qui est alors mise en œuvre par le module de poursuite 26.

En particulier, lors de la phase de poursuite, le module de poursuite 26 met à jour régulièrement les valeurs de Doppler et de retard ce qui lui permet de démoduler le signal reçu $S_r$ et d'en extraire l'information de navigation correspondante. Il transmet par la suite cette information au module de commande 30.

Finalement, le module de commande 30 consolide l'ensemble des informations acquises par l'ensemble des voies d'acquisition et en déduit la position du récepteur 20, sa vitesse et l'heure.

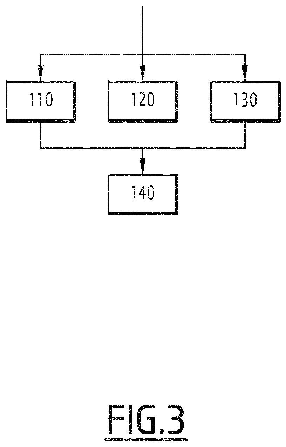

Le procédé de détection d'une fausse synchronisation va désormais être expliqué en détail en référence à la figure 3 présentant un organigramme de ses étapes.

En particulier, ce procédé comprend les étapes 110, 120 et 130 correspondant chacune à un critère d'une fausse synchronisation. Ces critères sont ensuite comparés avec des seuils prédéterminés lors de l'étape 140 qui permet alors de conclure si une fausse synchronisation a eu lieu ou non.

Les étapes 110 à 130 sont indépendantes l'une de l'autre et peuvent donc être mise en œuvre en parallèle ou de façon consécutive. Dans un mode de réalisation particulier, au moins certaines de ces étapes sont mises en œuvre en utilisant des résultats des calculs précédents effectués notamment lors de la phase d'acquisition.

Par ailleurs, dans le mode de réalisation décrit ci-dessous, les trois étapes 110 à 130 sont mises en œuvre et les trois critères sont donc comparés avec les seuils correspondants lors de l'étape 140.

Selon un autre exemple de réalisation, seulement deux étapes parmi les étapes 110 à 130 sont mises en œuvre et les deux critères obtenus sont donc comparés avec les seuils correspondants lors de l'étape 140.

Selon encore un autre exemple de réalisation, seulement une étape parmi les étapes 110 à 130 est mise en œuvre et le critère obtenu est donc comparé avec le seuil correspondant lors de l'étape 140.

Avant la mise œuvre des étapes 110 à 140, le module de détection 28 détermine une pluralité d'intervalles de corrélation qui sont par exemple les mêmes pour l'ensemble de ces étapes.

Chaque intervalle de corrélation est ainsi appelé intervalle de référence et sera identifié par la suite par l'indice $m$ variant entre 1 et $N$, $N$ étant le nombre total d'intervalles de références sur la durée de la phase de convergence.

Les intervalles de référence ont par exemple sensiblement la même durée $T$ qui est égale par exemple à 20 ms. Cette durée $T$ sera appelée par la suite valeur de référence.

Lors de l'étape 110, le module de détection 28 détermine une première valeur $v_1$ correspondant à l'anisotropie de la matrice de covariance entre les voies pilote et de données.

En particulier, lors de cette étape 110, le module de détection 28 détermine d'abord une pluralité de corrélations ponctuelles voie pilote $Z_p(m)$ et une pluralité de corrélations ponctuelles voie de données $Z_d(m)$.

Ces corrélations ponctuelles $Z_p(m)$ et $Z_d(m)$ sont déterminées comme suit :

$$Z_p(m) = \frac{1}{T}\int_{[mT,(m+1)T]} S_{loc}^{p}{}^{*}(t).S_r(t),$$

$$Z_d(m) = \frac{1}{T}\int_{[mT,(m+1)T]} S_{loc}^{d}{}^{*}(t).S_r(t),$$

où

$S_{loc}^{p}, S_{loc}^{d}$ et $S_r$ correspondent respectivement aux signal local pilot, signal local de données et signal reçu, comme expliqué précédemment ; et

$X^*$ signifie conjugué du nombre complexe $X$.

Puis, le module de détection 28 détermine une covariance $P_{pp}$ des corrélations ponctuelles voie pilote $Z_p(m)$, une covariance $P_{dd}$ des corrélations ponctuelles voie de données, une covariance $P_{pd}$ des corrélations ponctuelles voie pilote et des corrélations ponctuelles voie de données et une puissance de référence $P_{ref}$.

Ces valeurs sont définies comme suit :

$$P_{pp} = \frac{1}{N}\sum_{m=1,...,N} Z_p(m) \times Z_p(m)^* = \frac{1}{N}\sum_{m=1,...,N} ||Z_p(m)||^2,$$

$$P_{dd} = \frac{1}{N}\sum_{m=1,...,N} Z_d(m) \times Z_d(m)^* = \frac{1}{N}\sum_{m=1,...,N} ||Z_d(m)||^2,$$

$$P_{pd} = Re\left[\frac{1}{N}\sum_{m=1,...,N} Z_p(m) \times Z_p(m)^*\right],$$

$$P_{ref} = \left\| \frac{1}{N} \sum_m Z_p(m) . \exp\left(-j\theta(m)\right) . \epsilon(m) \right\|^2,$$

où

Re[X] signifie partie réelle du nombre complexe X;

$\varepsilon(m) = \pm 1$ est le code secondaire de la voie pilote ; et

$\theta(m)$ est l'estimation de la phase du nombre complexe $Z_p(m)$ effectuée grâce à la boucle de phase de porteuse.

Finalement, le module de détection 28 détermine la première valeur $v_1$ comme suit

$$v_1 = \frac{\left(P_{pp} - P_{dd}\right)^2 + 4P_{pd}^2}{\left(\frac{P_{ref}}{N}\right)^2} \sigma^2,$$

où $\sigma^l$ est la variance du bruit de $(P_{pp} - P_{dd})$ et de $2P_{pd}$.

La première valeur $v_1$ suit une loi de $\chi_2$ avec deux degrés de liberté.

Lors de l'étape 120, le module de détection 28 détermine une deuxième valeur $v_2$ en utilisant une pluralité de corrélations partielles voie pilote $Z_{pp}(m,p)$.

Chaque corrélation partielle voie pilote $Z_{pp}(m,p)$ correspond à une corrélation ponctuelle sur un intervalle d'intégration de longueur égale à une fraction de la valeur de référence $T$ entre le signal reçu $S_r$ et le signal local pilote $S_{loc}^p$.

Dans la notation $Z_{pp}(m,p)$, le nombre $p$ détermine le type de la corrélation partielle. Le nombre $p$ varie entre 1 et $P$, le nombre $P$ signifiant le nombre de fractions de l'intervalle de référence qui, dans l'exemple décrit, est égale à 4. Par ailleurs, ces fractions présentent toutes une même durée qui est égale alors à $T/4$.

Ainsi**,** chaque corrélation partielle voie pilote $Z_{pp}(m, p)$ est déterminée comme suit :

$$Z_{pp}(m, p) = \frac{1}{T} \int_{[mT+(p-1)T/4, \ mT+pT/4]} S_{loc}^p{}^*(t) . S_r(t) dt.$$

Finalement, la deuxième valeur $v_2$ est déterminée en utilisant la relation suivante :

$$v_2 = \frac{Sum_P}{P_{ref}} \sigma^2,$$

où

$$Sum_P = \left(I_{pp}(1) - M\right)^2 + \left(I_{pp}(2) - M\right)^2 + \left(I_{pp}(3) - M\right)^2 + \left(I_{pp}(4) - M\right)^2,$$

$$M = \frac{1}{4} \sum_{p=1,...,4} I_{pp}(p),$$

$$I_{pp}(p) = \frac{1}{N} \sum_{m=1,...,N} Re\left[Z_{pp}(m, p)\right] . \epsilon(m),$$

et

où

les valeurs $\varepsilon(m)$ et $P_{ref}$ sont définies précédemment ; et

$\sigma^2$ est la variance du bruit de chacune des fonctions $I_{pp}(p)$.

La deuxième valeur $v_2$ suit une loi de $\chi_2$ avec trois degrés de liberté.

En variante, il est possible de déterminer la deuxième valeur $v_2$ en utilisant également des corrélations partielles voie de données qui sont déterminées de manière analogue à celle utilisée pour déterminer les corrélations partielles voie pilote.

Dans ce cas, la deuxième valeur $v_2$ est déterminée comme suit :

$$v_2 = \frac{Sum_P + Sum_d}{P_{ref}},$$

où la valeur $Sum_d$ est déterminée de manière analogue à celle de la valeur $Sum_p$ mais en utilisant des corrélations partielles voie de données.

Lors de l'étape 130, le module de détection détermine une troisième valeur $v_3$ en fonction d'une pluralité de corrélations décalées voie pilote $Z_{pd}(m,\tau)$.

En particulier, chaque corrélation décalée voie pilote $Z_{pd}(m, \tau)$ correspond à une corrélation décalée entre le signal reçu $S_r$ et un signal local décalé $S_{loc}^{dp}$ correspondant au signal local pilote $S_{loc}^{p}$ dans lequel l'image locale du code d'étalement pilote $C_n^p(\phi_{cloc})$ est décalée d'un nombre entier de chips.

Ainsi, chaque corrélation décalée voie pilote $Z_{pd}(m,\tau)$ est déterminé comme suit :

$$Z_{pd}(m, \tau) = \frac{1}{T} \int_{[mT,(m+1)T]} S_{loc}^{pd\,*}(t, \tau).S_r(t),$$

où

$$S_{loc}^{pd}(t, \tau) = \exp\left(-j\phi_{ploc}(t)\right).C_n^p(\phi_{cloc}(t) + \tau),$$

avec $j^2 = -1$ et $\tau = kT_{chip}$, où le nombre $k$ varie entre $-K$ et $K$ et est différent de 0, le nombre $K$ signifiant le nombre maximal de décalages utilisés dans un sens.

Dans l'exemple décrit, quatre type de corrélations décalées correspondant respectivement à $k = +2, +1, -1$ et $-2$ sont déterminées. Ces corrélations sont dites très avancées ou très retardées en fonction du signe de $k$.

Selon d'autres exemples de réalisation, seules des corrélations très avancées ou des corrélations très retardées sont utilisées.

La troisième valeur $v_3$ est déterminée comme suit :

$$v_3 = \frac{I_{p+1}^2 + I_{p+2}^2 + I_{p-1}^2 + I_{p-2}^2}{P_{ref}} \sigma^2,$$

où

$$I_{p+k}(p) = \frac{1}{N} \sum_{m=1,...,N} Re\left[Z_{pd}\left(m, kT_{chip}\right)\right].\epsilon(m),$$

où

les valeurs $\varepsilon(m)$ et $P_{ref}$ sont définies précédemment ; et
$\sigma^2$ est la variance du bruit de chacune des fonctions $I_{p+k}(p)$.

La troisième valeur $v_3$ suit une loi de $\chi_2$ avec quatre degrés de liberté.

En variante, comme dans le cas précédent, il est possible d'utiliser des corrélations décalées voie de données. Dans cas, les valeurs $I_{p+k}(p)$ pour les corrélations décalées voie de données seront déterminées de manière analogue à celle utilisée pour déterminer ces valeurs pour les corrélations décalées voie pilote.

Lors de l'étape 140, le module de détection 28 analyse les valeurs $v_1$, $v_2$ et $v_3$ pour détecter une fausse synchronisation.

En particulier, lorsque au moins l'une de ces valeurs $v_1, v_2$ et $v_3$ dépasse un seuil prédéterminé pour cette valeur, le module de détection 28 détecte une fausse synchronisation.

On conçoit alors que la présente invention présente un certain nombre d'avantages.

En effet, l'invention permet de détecter une phase synchronisation avec un satellite indépendamment du type des codes d'étalement utilisés.

Cette détection s'effectue avec une grande probabilité ce qui rend l'invention particulièrement efficace.

De plus, l'invention présente des avantages particuliers lorsque le système global 10 est le système GALILEO et lorsque notamment, le récepteur selon l'invention est utilisé pour recevoir des signaux dits « ouverts » de la bande L1.

Il est connu dans ce cas que les codes d'étalement de données ou pilote utilisés sont périodique à 4 millisecondes.

Ainsi, il n'y a pas besoin de recalculer les corrélations partielles lors de l'étape 120 lorsque le nombre P est égal à 4, c'est-à-dire lorsque les corrélations partielles sont calculées sur un quart de l'intervalle de référence soit 1 milliseconde, car ces corrélations ont déjà été calculées sur des intervalles de temps de 1 milliseconde, correspondant à un temps d'intégration couramment utilisé dans les canaux satellites des récepteurs.

Finalement, il a été observé que les codes d'étalement de données ou pilote desdits signaux présentent des propriétés particulières. En particulier, leurs autocorrélations sont nulles ou quasi-nulles à - 2 chip, -1 chip, +1 chip et +2 chip autour du pic d'autocorrélation principal. Cela rend alors la troisième valeur $v_3$ particulièrement représentative d'un faux accrochage lorsque $K = 2$.

## Revendications

1. Procédé de détection d'une fausse synchronisation d'un récepteur (20) avec un satellite lors d'une phase d'acquisition d'un signal de navigation issu de ce satellite, le satellite faisant partie d'un système (10) global de positionnement par satellites ;

 le signal de navigation comprenant une voie de données comportant une information de navigation modulée par un code d'étalement de données propre à ce satellite et portée par une onde porteuse, et une voie pilote comportant un code d'étalement pilote propre à ce satellite et portée par une onde porteuse ;
 lors de la phase d'acquisition, le récepteur (20) étant apte à recevoir le signal de navigation, dit signal reçu, émis par le satellite, à générer un signal local de données comportant une image locale du code d'étalement de données et une image locale de l'onde porteuse, et à générer un signal local pilote comportant une image locale du code d'étalement pilote et l'image locale de l'onde porteuse ;
 le procédé étant mis en œuvre après la phase d'acquisition pendant une phase de convergence et comprenant les étapes suivantes :

 - détermination (110) d'une pluralité de corrélations ponctuelles voie pilote correspondant chacune à une corrélation ponctuelle sur un intervalle de référence de durée égale à une valeur de référence entre le signal reçu et le signal local pilote, et d'une pluralité de corrélations ponctuelles voie de données correspondant chacune à une corrélation ponctuelle sur l'un des intervalles de référence entre le signal reçu et le signal local de données, et détermination d'une première valeur en fonction de ces corrélations ponctuelles ;
 - détermination (120) d'une pluralité de corrélations partielles voie pilote correspondant chacune à une corrélation ponctuelle sur un intervalle de durée égale à une fraction de la valeur de référence entre le signal reçu et le signal local pilote, et détermination d'une deuxième valeur en fonction de ces corrélations partielles ;
 - détermination (130) d'une pluralité de corrélations décalées voie pilote correspondant chacune à une corrélation décalée sur l'un des intervalles de référence entre le signal reçu et un signal local décalé correspondant au signal local pilote dans lequel l'image locale du code d'étalement pilote est décalée d'un nombre entier d'unités de référence, et détermination d'une troisième valeur en fonction de ces corrélations décalées voie pilote ;
 - détermination (140) d'une fausse synchronisation lorsque au moins l'une des valeurs parmi la première valeur, la deuxième valeur et la troisième valeur, lorsqu'une telle valeur est déterminée, dépasse un seuil prédéterminé;

 la première valeur étant déterminée sur la base de covariances entre les corrélations ponctuelles voie pilote et les corrélations ponctuelles voie de données.

2. Procédé selon la revendication 1, dans lequel la première valeur est déterminée comme suit :

$$v_1 = \frac{\left(P_{pp} - P_{dd}\right)^2 + 4P_{pd}^2}{\left(P_{ref}/N\right)^2}\,\sigma^2,$$

où

$v_1$ est la première valeur ;
$N$ est le nombre des corrélations ponctuelles voie pilote égal au nombre des corrélations ponctuelles voie de données ;
$P_{pp}$ est la covariance des corrélations ponctuelles voie pilote ;
$P_{dd}$ est la covariance des corrélations ponctuelles voie de données ;
$P_{pd}$ est la covariance des corrélations ponctuelles voie pilote et des corrélations ponctuelles voies de données ;
$P_{ref}$ est une puissance de référence déterminée en fonction des corrélations ponctuelles voie pilote ; et
$\sigma^2$ est la variance du bruit de ($P_{pp}$ - $P_{dd}$) et de $2P_{pd}$.

3. Procédé selon l'une quelconque des revendications précédentes, dans lequel, lors de l'étape de l'étape de détermination (120) d'une pluralité de corrélations partielles voie pilote, $P$ types de corrélations partielles sont déterminées, une corrélation partielle d'un type donné étant déterminée sur une fraction prédéterminée de l'un des intervalles de référence.

4. Procédé selon la revendication 3, dans lequel la deuxième valeur est déterminée comme suit :

$$v_2 = \frac{Sum_P}{P_{ref}}\sigma^2,$$

où

$$Sum_P = \sum_{p=1,\dots,P}\left(I_{pp}(p) - M\right)^2,$$

$$M = \frac{1}{P}\sum_{p=1,\dots,P} I_{pp}(p),$$

$$I_{pp}(p) = \frac{1}{N}\sum_{m=1,\dots,N} Re\big[Z_{pp}(m,p)\big].\epsilon(m),$$

où

$v_2$ est la deuxième valeur ;
$N$ est le nombre des corrélations partielles ;
$\epsilon(m)$ est le code secondaire de la voie pilote qui est égal à 1 ou à -1 ;
$Z_{pp}(m,p)$ est une corrélation partielle d'un type $p$, le nombre $p$ étant compris entre 1 et $P$ ;
$P_{ref}$ est une puissance de référence déterminée en fonction des corrélations ponctuelles voie pilotes ;
$Re[X]$ est la partie réelle d'un nombre complexe $X$ ; et
$\sigma^2$ est la variance du bruit de chacune des fonctions $I_{pp}(p)$.

5. Procédé selon l'une quelconque des revendications 1 à 3, dans lequel la deuxième valeur est déterminée en outre en fonction d'une pluralité de corrélations partielles voie de données correspondant chacune à une corrélation ponctuelle sur un intervalle de durée égale à une fraction de la valeur de référence entre le signal reçu et le signal local de données.

**6.** Procédé selon l'une quelconque des revendications précédentes, dans lequel chaque corrélation décalée voie pilote est déterminée en utilisant l'image locale du code d'étalement pilote avancé ou retardé d'une ou de deux unités de référence.

**7.** Procédé selon l'une quelconque des revendications précédentes, dans lequel la troisième valeur est déterminée comme suit :

$$v_3 = \frac{\sum_{k \in E}(I_{p+k}^2)}{P_{ref}}\sigma^2,$$

où

$$I_{p+k}(p) = \frac{1}{N}\sum_{m=1,...,N} Re\big[Z_{pd}\big(m, kT_{chip}\big)\big].\epsilon(m),$$

où

$v_3$ est la troisième valeur ;

$N$ est le nombre des corrélations décalées ;

$\varepsilon(m)$ est le code secondaire de la voie pilote, ses valeurs étant égales à 1 ou à -1 ;

$E$ est un sous-ensemble de l'ensemble {-$K$, ...,-1,1, ...,$K$}, où $K$ est le nombre maximal de décalages utilisés dans un sens ;

$Z_{pd}(m,kt_{chip})$ est une corrélation avancée de $k$ unités de référence lorsque $k > 0$ et retardée de $k$ unités de référence lorsque $k < 0$ ;

$P_{ref}$ est une puissance de référence déterminée en fonction des corrélations ponctuelles voie pilote ; et

$\sigma^2$ est la variance du bruit de chacune des fonctions $I_{p+k}(p)$,

**8.** Produit programme d'ordinateur comportant des instructions logicielles qui, lorsque mises en œuvre par un équipement informatique, mettent en œuvre le procédé selon l'une quelconque des revendications précédentes.

**9.** Récepteur (20) comportant un module de détection (28) configuré pour mettre en œuvre le procédé selon l'une quelconque des revendications 1 à 7.


**Patentansprüche**

**1.** Verfahren zur Erkennung einer falschen Synchronisation eines Empfängers (20) mit einem Satelliten während einer Erfassungsphase eines Navigationssignals, das von diesem Satelliten stammt, wobei der Satellit Teil eines globalen Navigationssatellitensystems (10) ist;

das Navigationssignal umfassend einen Datenkanal, der Navigationsinformationen umfasst, die durch einen Datenausbreitungscode moduliert werden, der diesem Satelliten eigen ist, und von einer Trägerwelle getragen werden, und einen Steuerkanal, umfassend einen Steuerausbreitungscode, der diesem Satelliten eigen ist und der von einer Trägerwelle getragen wird;

wobei der Empfänger (20) während der Erfassungsphase, geeignet ist, um das Navigationssignal, bezeichnet als empfangenes Signal, zu empfangen, das von dem Satelliten emittiert wird, ein lokales Datensignal zu erzeugen, umfassend ein lokales Bild des Datenausbreitungscodes und ein lokales Bild der Trägerwelle, und ein lokales Steuersignal zu erzeugen, umfassend ein lokales Bild des Steuerausbreitungscodes und das lokale Bild der Trägerwelle;

wobei das Verfahren nach der Erfassungsphase während einer Konvergenzphase durchgeführt wird und die folgenden Schritte umfasst:

- Bestimmen (110) einer Vielzahl von punktuellen Steuerkanalkorrelationen, die jeweils einer punktuellen Korrelation über ein Referenzintervall entsprechen, dessen Dauer gleich wie ein Referenzwert zwischen dem empfangenen Signal und dem lokalen Steuersignal ist, und einer Vielzahl von Datenkanalpunktkorrelationen, die jeweils einer punktuelle Korrelation auf einem der Referenzintervalle zwischen dem empfangenen Signal und dem lokalen Datensignal entsprechen, und Bestimmen eines ersten Werts abhängig von diesen punktuellen Korrelationen;

- - Bestimmen (120) einer Vielzahl von partiellen Steuerkanalkorrelationen, die jeweils einer punktuellen Korrelation über ein Referenzintervall entsprechen, dessen Dauer gleich wie eine Fraktion des Referenzwerts zwischen dem empfangenen Signal und dem lokalen Steuersignal ist, und Bestimmen eines zweiten Werts basierend auf diesen partiellen Korrelationen;

- Bestimmen (130) einer Vielzahl von versetzten Steuerkanalkorrelationen, die jeweils einer versetzten Korrelation auf einem der Referenzintervalle zwischen dem empfangenen Signal und einem versetzten lokalen Signal entsprechen, das dem lokalen Steuersignal entspricht, in dem das lokale Bild des Steuerausbreitungscodes um eine ganze Zahl von Referenzeinheiten versetzt ist, und Bestimmen eines dritten Werts basierend auf diesen versetzten Steuerkanalkorrelationen;
- Bestimmen (140) einer falschen Synchronisation, wenn mindestens einer der Werte von dem ersten Wert, dem zweiten Wert und dem dritten Wert, wenn ein solcher Wert bestimmt wird, einen vorbestimmten Schwellenwert überschreitet; wobei der erste Wert basierend auf Kovarianzen zwischen den punktuellen Steuerkanalkorrelationen und den punktuellen Datenkanalkorrelationen bestimmt wird.

2. Verfahren nach Anspruch 1, wobei der erste Wert wie folgt bestimmt wird:

$$v_1 = \frac{\left(P_{pp} - P_{dd}\right)^2 + 4P_{pd}^2}{\left(P_{ref}/N\right)^2}\,\sigma^2,$$

wobei

$v_1$ der erste Wert ist;
$N$ die Anzahl von punktuellen Steuerkanalkorrelationen gleich wie die Anzahl punktuellen Datenkanalkorrelationen ist;
$P_{pp}$ die Kovarianz der punktuellen Steuerkanalkorrelationen ist;
$P_{dd}$ die Kovarianz der punktuellen Datenkanalkorrelationen ist;
$P_{pd}$ die Kovarianz der punktuellen Steuerkanalkorrelationen und der punktuellen Datenkanalkorrelationen ist;
$P_{ref}$ eine Referenzleistung ist, die basierend auf den punktuellen Steuerkanalkorrelationen bestimmt wird; und
$\sigma^2$ die Varianz des Rauschens von $(P_{pp} - P_{dd})$ und von $2P_{pd}$ ist.

3. Verfahren nach einem der vorherigen Ansprüche, wobei in dem Schritt des Bestimmungsschritts (120) einer Vielzahl von partiellen Steuerkanalkorrelationen $P$ Typen von partiellen Korrelationen bestimmt werden, wobei eine partielle Korrelation eines gegebenen Typs über einen vorbestimmten Bruchteil eines der Referenzintervalle bestimmt wird.

4. Verfahren nach Anspruch 3, wobei der zweite Wert wie folgt bestimmt wird:

$$v_2 = \frac{Sum_P}{P_{ref}}\sigma^2,$$

wobei

$$Sum_P = \sum_{p=1,\dots,P} \left(I_{pp}(p) - M\right)^2,$$

$$M = \frac{1}{P} \sum_{p=1,\dots,P} I_{pp}(p),$$

$$I_{pp}(p) = \frac{1}{N} \sum_{m=1,\ldots,N} Re\big[Z_{pp}(m,p)\big] \cdot \epsilon(m),$$

wobei

$v_2$ der zweite Wert ist;

$N$ die Anzahl der partiellen Korrelationen ist;

$\varepsilon(m)$ der sekundäre Code des Steuerkanals ist, der gleich 1 oder -1 ist;

$Z_{pp}(m,p)$ eine partielle Korrelation eines Typs $p$ ist, wobei die Zahl $p$ zwischen 1 und $P$ liegt;

$P_{ref}$ eine Referenzleistung ist, die basierend auf den punktuellen Steuerkanalkorrelationen bestimmt wird;

$Re[X]$ der reale Teil einer komplexen Zahl ist; und

$\sigma^2$ die Rauschvarianz jeder der Funktionen $I_{pp}(p)$ ist.

5. Verfahren nach einem der Ansprüche 1 bis 3, wobei der zweite Wert ferner abhängig von einer Vielzahl von partiellen Datenkanalkorrelationen bestimmt wird, die jeweils einer punktuellen Korrelation über ein Zeitintervall entsprechen, das gleich wie eine Fraktion des Referenzwerts zwischen dem empfangenen Signal und dem lokalen Datensignal ist.

6. Verfahren nach einem der vorherigen Ansprüche, wobei jede versetzte Steuerkanalkorrelation unter Verwendung des lokalen Bilds des vorgezogenen oder verzögerten Steuerausbreitungscodes von einer oder zwei Referenzeinheiten bestimmt wird.

7. Verfahren nach einem der vorherigen Ansprüche, wobei der dritte Wert wie folgt bestimmt wird:

$$v_3 = \frac{\sum_{k \in E}\big(I_{p+k}^2\big)}{P_{ref}} \sigma^2,$$

wobei

$$I_{p+k}(p) = \frac{1}{N} \sum_{m=1,\ldots,N} Re\big[Z_{pd}\big(m,kT_{chip}\big)\big] \cdot \epsilon(m),$$

wobei

$v_3$ der dritte Wert ist;

$N$ die Anzahl versetzter Korrelationen ist;

$\varepsilon(m)$ der sekundäre Code des Steuerkanals ist, wobei seine Werte gleich 1 oder -1 sind;

$E$ eine Teilmenge der Menge $\{-K,\ldots,-1,1,\ldots,K\}$ ist, wobei $K$ die maximale Anzahl von Versätzen ist, die in einer Richtung verwendet werden;

$Z_{pd}(m,kT_{chip})$ eine um $k$ Referenzeinheiten vorgezogene Korrelation ist, wenn $k > 0$ und eine um $k$ Referenzeinheiten verzögerte Korrelation, wenn $k < 0$;

$P_{ref}$ eine Referenzleistung ist, die basierend auf den punktuellen Steuerkanalkorrelationen bestimmt wird; und

$\sigma^2$ die Rauschvarianz jeder der Funktionen $I_{p+k}(p)$ ist.

8. Computerprogrammprodukt, umfassend Softwareanweisungen, die, wenn sie von einer Rechenvorrichtung durchgeführt werden, das Verfahren nach einem der vorherigen Ansprüche durchführen.

9. Empfänger (20), umfassend ein Erfassungsmodul (28), das konfiguriert ist, um das Verfahren nach einem der Ansprüche 1 bis 7 durchzuführen.

**Claims**

1. A method for determining a wrong synchronization of a receiver (20) with a satellite during a phase for acquiring a navigation signal coming from this satellite, the satellite belonging to a global navigation satellite system (10);

the navigation signal comprising a data channel including an item of navigation information modulated by a data spreading code specific to this satellite and carried by a carrier wave, and a pilot channel including a pilot spreading code specific to this satellite and carried by a carrier wave;

during the acquisition phase, the receiver (20) being able to receive the navigation signal, called received signal, transmitted by the satellite, to generate a local data signal including a local image of the data spreading code and a local image of the carrier wave, and to generate a local pilot signal including a local image of the pilot spreading code and the local image of the carrier wave;

the method being implemented after the acquisition phase during a convergence phase and comprising at least one of the following steps:

- determining (110) a plurality of periodic pilot channel correlations each corresponding to a periodic correlation on a reference interval of duration equal to a reference value between the received signal and the local pilot signal, and a plurality of periodic data channel correlations each corresponding to a periodic correlation on one of the reference intervals between the received signal and the local data signal, and determining a first value as a function of these periodic correlations;

- determining (120) a plurality of partial pilot channel correlations each corresponding to a periodic correlation on an interval of duration equal to a fraction of the reference value between the received signal and the local pilot signal, and determining a second value as a function of these partial correlations;

- determining (130) a plurality of shifted pilot channel correlations each corresponding to a shifted correlation on one of the reference intervals between the received signal and a shifted local signal corresponding to the local pilot signal in which the local image of the pilot spreading code is shifted by an integer number of reference units, and determining a third value as a function of these shifted pilot channel correlations;

the convergence phase further comprising the following step:

- determining (140) a wrong synchronization when at least one of the values among the first value, the second value and the third value, when such a value is determined, exceeds a predetermined threshold;

the first value being determined based on covariances between the periodic pilot channel correlations and the periodic data channel correlations.

2. The method according to claim 1, wherein the first value is determined as follows:

$$v_1 = \frac{(P_{pp} - P_{dd})^2 + 4P_{pd}^2}{(P_{ref}/N)^2} \sigma^2,$$

where

$v_1$ is the first value;

$N$ is the number of pilot channel periodic correlations equal to the number of data channel periodic correlations;

$P_{pp}$ is the covariance of the pilot channel periodic correlations;

$P_{dd}$ is the covariance of the data channel periodic correlations;

$P_{pd}$ is the covariance of the pilot channel periodic correlations and the data channel periodic correlations;

$P_{ref}$ is a reference power determined as a function of the pilot channel periodic correlations; and

$\sigma^2$ is the variance of the noise of $(P_{pp} - P_{dd})$ and $2P_{pd}$.

3. The method according to any one of the preceding claims, wherein, during the step for determining (120) a plurality of pilot channel partial correlations, $P$ types of partial correlations are determined, a partial correlation of a given type being determined on a predetermined fraction of one of the reference intervals.

4. The method according to claim 4, wherein the second value is determined as follows:

$$v_2 = \frac{Sum_P}{P_{ref}} \sigma^2,$$

where

$$Sum_P = \sum_{p=1,...,P} (I_{pp}(p) - M)^2,$$

$$M = \frac{1}{P} \sum_{p=1,...,P} I_{pp}(p),$$

$$I_{pp}(p) = \frac{1}{N} \sum_{m=1,...,N} Re[Z_{pp}(m,p)].\epsilon(m),$$

where

$v_2$ is the second value;
$N$ is the number of partial correlations;
$\epsilon(m)$ is the secondary code of the pilot channel 1 or - 1 ;
$Z_{pp}(m,p)$ is a partial correlation of a type $p$, the number $p$ being inclusively between 1 and $P$;
$P_{ref}$ is a reference power determined as a function of the pilot channel periodic correlations;
$Re[X]$ is the real part of a complex number $X$ ; and
$\sigma^2$ is the variance of the noise of each of the functions $I_{pp}(p)$.

5. The method according to any one of claims 1 to 3, wherein the second value is further determined as a function of a plurality of data channel partial correlations each corresponding to a periodic correlation over an interval of duration equal to a fraction of the reference value between the received signal and the local data signal.

6. The method according to any one of the preceding claims, wherein each shifted pilot channel correlation is determined by using the local image of the pilot spreading code advanced or delayed by one or two reference units.

7. The method according to any one of the preceding claims, wherein the third value is determined as follows:

$$v_3 = \frac{\sum_{k \in E} \left( I_{p+k}^2 \right)}{P_{ref}} \sigma^2,$$

$$I_{p+k}(p) = \frac{1}{N} \sum_{m=1,...,N} Re[Z_{pd}(m, kT_{chip})].\epsilon(m)$$

where

where
$v_3$ is the third voltage,
$N$ is the number of shifted correlations;
$\epsilon(m)$ is the secondary code of the pilot channel, its values being equal to 1 or - 1 ;
$E$ is a subset of the set {- $K$, ..., - 1,1,...$K$}, where $K$ is the maximum number of shifts used in one direction;
$Z_{pd}(m,kT_{chip})$ is a correlation advanced by $k$ reference units when $k > 0$ and delayed by $k$ reference units when $k < 0$;
$P_{ref}$ is a reference power determined as a function of the pilot channel periodic correlations; and
$\sigma^2$ is the variance of the noise of each of the functions $I_{p+k}(p)$.

8. A computer program product comprising software instructions which, when implemented by a piece of computer equipment, carry out the method according to any one of the preceding claims.

9. A receiver (20) including a detection module (28) configured to carry out the method according to any one of claims 1 to 7.

**FIG.1**

FIG.2

FIG.3

## RÉFÉRENCES CITÉES DANS LA DESCRIPTION

**Documents brevets cités dans la description**

- FR 3043790
- FR 3047567
- US 2011103432 A1